# EUROPEAN PATENT APPLICATION

(11) **EP 3 837 990 A1**
(43) Date of publication of application: **23.06.2021**
(21) Application number: 19218552.8
(22) Date of filing: 20.12.2019
(51) Int. Cl.: A23L 21/25, A23F 3/40, A23L 2/60

(54) **HONEY-BASED BEVERAGE PREMIX AND METHOD OF PREPARING THE SAME**

(71) Applicant: Khosh, Philip, 24113 Molfsee (DE)
(72) Inventor: Khosh, Philip, 24113 Molfsee (DE)
(74) Representative: Moré, Solveig Helga

(57) **Abstract**

The present invention relates to the field of beverage premixes and premixes for food preparation. In particular, the invention provides a composition suitable for preparing a beverage or food, comprising honey and a water-based plant extract, wherein the composition has a specific water content and viscosity. This composition is syrup-like and can be used as a premix for preparing sweetened and flavored beverages and foods. The characteristics of the composition allow for dispensing a predetermined amount with a pumping mechanism, and also guarantee a long storage stability. The invention also discloses a container comprising the composition and a method for preparing said composition. The use of the premix composition for preparing beverage or food is also taught. The beverage may be a sweetened and flavored beverage or food, preferably a saffron milk. Plant parts and honey removed from the composition of the invention after mixing the water-based plant extract with the honey may also be used for preparation of a beverage or food.

## Description

The present invention relates to the field of beverage premixes and premixes for food preparation. In particular, the invention provides a composition suitable for preparing a beverage or food, comprising honey and a water-based plant extract, wherein the composition has a specific water content and viscosity. This composition is syrup-like and can be used as a premix for preparing sweetened and flavored beverages and foods. The characteristics of the composition allow for dispensing a predetermined amount with a pumping mechanism, and also guarantee a long storage stability. The invention also discloses a container comprising the composition and a method for preparing said composition. The use of the premix composition for preparing beverage or food is also taught. The beverage may be a sweetened and flavored beverage or food, preferably a saffron milk. Plant parts and honey removed from the composition of the invention after mixing the water-based plant extract with the honey may also be used for preparation of a beverage or food.

There is a multitude of beverages that may be prepared based on plant extracts, usually, by extracting plants or plant parts with boiling water, or by cooking plant parts in water. Such beverage may be a tea (strictly speaking, a drink based on an extract of leaves of *Camellia sinensis*), or an infusion (a drink made from the leaves, fruits, or flowers of other plants, often also designated an herbal tea). Tea may be flavored with herbs or spices, or mixtures thereof. The final beverage is often drunk in pure form, but it is also common to add milk and/or sugar or honey. Traditions are often regional, e.g., in India, masala chai tea with jaggery or sugar as a sweetener is common. Tibet and Nepal are known for yak milk or butter teas. From Hong Kong, there is pantyhose milk tea with sweetened condensed milk, and sweet bubble teas are a favourite of Taiwan. In North America, tea lattes are very popular and often sweetened with sugar or simple syrup. Hot beverages may also be prepared by boiling milk with plant parts or herbs, e.g., in saffron milk, hot chocolate, or variants of chai latte. For example, saffron milk recipes typically involve mixing saffron powder and other spices with milk, followed by boiling of the milk and the addition of a few spoons of honey. However, the purchase of spices like saffron is expensive and their grinding or shearing into powder is as time-consuming as the cooking itself.

Thus, lately, there has been a trend towards use of flavoured syrups for preparing hot or cold drinks, in particular, in the context of catering, e.g., in coffee houses. The use of syrups - or beverage premixes - simplifies the preparation of drinks, as the extraction of flavours from plant parts does not have to be performed at the time of preparation of the drink, thus saving time. Often, the syrup is simply foamed with milk or diluted and mixed with hot or cold water. These beverage premixes are essentially syrups consisting of sugar, water, flavours and additives, e.g., preservatives. In the preparation of these syrups, a sugar solution is typically mixed with acids, preservatives, flavouring and colouring agents.

For example, syrups with a variety of flavors are obtainable from Monin, France, e.g., a honey-flavored syrup consisting of pure cane sugar (sucrose), water, honey flavor, the antioxidant citric acid and the preservative potassium sorbate is distributed by Monin as a sweetening beverage supplement. Comparable products are also distributed by other companies, i.e. Giffard Honey Syrup (Giffard, France) or DaVinci Gourmet Honeycomb Classic Honey Flavour Syrup (Kerry Foodservice, USA).

However, an increasing number of customers is becoming more health-oriented, and they are becoming more critical of "artificially-made products" and "sugar-water products" without mentionable nutritional benefits. Thus, there is a demand for healthier beverage premixes that share the advantages of such commercially available syrups, e.g., they may be easily used for preparation of beverages, dispensable with a pumping device and/or suitable for long-term storage without degradation. This problem is solved by the present invention, especially by the subject matter of the claims.

The present invention provides a composition suitable for preparing a beverage or food, comprising honey and a water-based plant extract, wherein the composition has a water content of 17 - 23 % (wt/wt) and a viscosity η of at most 15,000 mPa*s (dynamic viscosity).

Throughout the invention, the water content is provided as wt/wt, measured at 20°C. Preferably, the water content is measured according to ASU L 40.00-2 (1992-12) VA140. Viscosity is measured at 20°C according to the falling sphere/ball viscometer method (developed by Hoppler, as described in the European Pharmacopoeia (Ph. Eur. 2.2.49, 9th edition, 3rd suppl. 2017/18).

The honey-based, syrup-like beverage and/or food premix composition of the present invention can advantageously be used in the catering and beverage industry, and they are equally practical for the end consumer. Its decreased viscosity compared to honey as such allows the composition to be processed efficiently and thus, it can e.g. be dispensed via conventional pump bottles. In addition, the composition is more easily soluble than honey due to its increased water content. Finally, the composition may be produced on the basis of an ecological, sustainable and health-beneficial design.

Honeys are naturally produced by honeybees (*Apis spp.,* typically, *Apis mellifera*) from the collected nectar of flowering plants or from honeydew, a sugary secretion released by aphids and other insects. The physical properties of honey primarily depend on its water content and precise sugar composition, the surrounding temperature as well as the origin of the nectar utilized by the bees. Most types of honey are viscous, supersaturated liquids with high levels of sugar, predominantly monosaccharides like glucose (25-40%) and fructose (30-55%) and a water content below 18% (wt/wt). The glucose in honey frequently crystallizes at temperatures between 10-21°C due to the limited solubility of glucose in water. (https://apismellifera.io/crystallization-of-honey/, https://honeypedia.info/why-does-honey-crystallize). Honey crystallization can be artificially controlled; e.g., by pasteurization, or, during the production of creamed honey, by inducing the formation of fine glucose crystals in the unprocessed honey, or via inoculation with microscopic seed crystals.

Health benefits of honey has been widely described and, partly, scientifically proven, e.g., antibacterial properties (Samarghandian et al. 2017. Pharmacognosy Res. 9(2), 121-127.). Due to the high content of antimicrobial methylglyoxal present, e.g., in Manuka honey, some honeys are considered to be of special medical relevance, but, also generally, honey contains high levels of antioxidants that fight oxidative stress and inflammation, which underlie many cancers and cardiovascular disease.

Due to its health benefits, sweetness, and pleasantly-perceived taste, honey is a popular spread for rolls, bread and other baking goods. In addition, honey is frequently used to sweeten and/or flavor beverages and foods such as tea, milk, cereals or yoghurt. Various honey products comprising food additives and aromas are known. Several companies and webpages distribute honeys with up to 10% fruit concentrate or mixed with tea powder, herb leaves, nuts or spices such as ginger or saffron (see for instance: https://www.honig-reinmuth.de/honig/honigspezialitaten.html, https://honeyandspice.in/collections/flavoured-honey, http://www.saffronspices.co.uk/home/104-saffron-honey-340g.html, https://die-gewuerznuss.de/products/matcha-in-honig, Manuka Health Manuka Honey with green tea extract MGO 250 (Manuka Health, New Zealand, https://www.dolphinfitness.co.uk/en/manuka-health-manuka-honey-and-green-tea-500g/130293). However, these products do not share the advantageous properties of the products of the invention, as they do not comprise a water-based plant extract. They also typically have a high viscosity that makes them unsuitable for administration with a pumping mechanism. Manuka Health also distributes a honey-based syrup, Manuka Honey Syrup, that contains 49% honey as well as water, alcohol, flavorings and various plant and fruit extracts as a supplement to strengthen the immune system. This syrup does not have the low water content advantageous in the composition of the present invention.

Due to its high sugar content and enzymes present in cold-processed honey, honey is considered to be a natural preservative. However, increasing the water content of raw honey above 20% significantly promotes the risk of undesired fermentation which impairs the quality of the honey. According to Lochhead, A.G. (1933, Factors concerned with the fermentation of honey, Zentbl. Bakt. Parasitknde II. Abt. 88, 296-302), the tendency of honey fermentation increases rapidly with increasing water content: whereas honey with a water content up to 17% does not ferment, honey with a water content of 17.1-18% may contain < 1000 cells /g without initiating fermentation, honey with a water content of 18.1-19% may contain < 10 cells /g without initiating fermentation, and honey with a water content of more than 20% means that there is a constant danger of fermentation.

In addition to its high sugar content, the long lifespan of honey is attributed to the presence of enzymes such as glucose oxidase, an enzyme produced by bees during the processing of nectar. Glucose oxidase catalyzes the oxidation of glucose and leads to the generation of D-glucono-δ-lactone and hydrogen peroxide which exerts antimicrobial activity. Therefore, honey should not be heated to temperatures above 40°C to prevent denaturation of glucose oxidase and other enzymes.

The composition of the invention has a water content of 17-23%. Preferably the water content is 18-20%, most preferably, 19-20 %. This allows for long stability, i.e., absence of fermentation, e.g., for more than 6 months, more than 1 year, or preferably, for more than 2 years storage. However, a composition of the invention with a water content of up to 23%, preferably, up to 22% or up to 21% may also be stable for commercially reasonable time periods, e.g., more than 6 months, more than 1 year, or preferably, for more than 2 years storage. Of course, firstly, care should be taken during production to avoid microbial contaminations. Furthermore, however, the plant-based extracts also present in the composition of the invention may also have antimicrobial characteristics, e.g., as known, e.g., for saffron, cinnamon, cardamom, cloves, ginger, lavender, black or green tea (e.g., Pintado et al., 2011, Food Control 22: 638-642, Muzaffar et al., 2016, Cogent Food & Agriculture, 2: 1158999). Thus, water-contents of more than 20% are preferred in combination with plant-based extracts having antimicrobial, e.g., antibacterial and/or antifungal properties.

Water activity (aw) is the partial vapor pressure of water in a substance divided by the standard state partial vapor pressure of water. In the field of food science, the standard state is most often defined as the partial vapor pressure of pure water at the same temperature. Using this particular definition, pure distilled water has a water activity of exactly one. As temperature increases, aw typically increases, except in some products with crystalline salt or sugar. In the context of the invention, water activity is measured at 20°C with an Aqualab 4TE (METER Group AG, USA; measurements were performed at KIN Lebensmittelinstitut, Neumünster, Germany). Honey is described in the literature as having a water activity of 0.5-0.65 (Chen, 2019, Relationship between Water Activity and Moisture Content in Floral Honey, Foods 8:30, 1-18), or up to 0.75. The variability may depend on the type of honey analyzed, which is mostly not specified. For the exemplary acacia-honey based compositions of the invention described herein, a water activity of 0.62 was detected. The compositions of the invention may e.g. have a water activity of 0.75 or less, preferably, of 0.7 or less or 0.65 or less. Higher aw substances tend to support more microorganisms. Bacteria usually require at least 0.91, and fungi at least 0.7 (https://en.wikipedia.org/wiki/Water_activity). Specialized osmophilic yeasts such as *Zygosaccharomyces rouxii* are thought to grow at aw values as low as 0.62-0.66. The occurrence of such yeasts can be controlled by maintaining high quality standards and a good production practice. Yeast count, storage temperature and water content are all parameters that need to be closely monitored to prevent honey fermentation. Thus, it is recommended to aim for an aw value of 0.65 or less, e.g., 0.62 or less. Higher aw values are also possible, since yeast count is very low and, as described, other ingredients of the composition of the invention contribute to stability. Additionally, storage temperatures below 11°C are known to inactivate osmophilic yeasts (Marvin, G.E. 1932. The occurrence and characteristics of certain yeasts found in fermented honey. J. econ. Ent. 21 (2) 363-370).

Preferably, the honey used for preparation of the present composition conforms to the quality standards of the German Beekeepers' Association (Deutsche Honigverordnung - DHV) or a comparable institution. In particular, it still comprises vitamins and enzymes such as glucose oxidase, diatase and invertase that are not denatured by inexpert processing, e.g., due to excessive heating during the production process. Raw honey that has not been heat-treated above 40°C is preferable.

Other than the plant-based extracts and the honey, the composition of the invention typically does not comprise any preservatives, in particular, no artificial preservative additives, but relies entirely on the natural preservative properties of these ingredients. While additives such as citric acid are considered harmless, they are typically artificially produced and may be disapproved by customers as non-natural. In a preferred embodiment, the composition consists of the honey and the water-based plant extract.

The composition of the present invention has a viscosity η of at most 15,000 mPa*s, preferably, 1,000-15,000 mPa*s. Compositions with a viscosity of 5,000-10,000 mPa*s have shown very good handling characteristics. Viscosity, for example for an acacia-honey-based composition of the invention, may be 6,000-9,000 mPa*s or, in particular in combination with saffron and optionally other spices, 7,000-8,000 mPa*s. For comparison, the viscosity of conventional acacia honey was determined to be 27,492 mPa*s. Compared to honey, the decreased viscosity increases flowability, and allows for easy dosing of the composition, in particular, dispensal via a pump dispenser, e.g., a conventional pump bottle.

The content of honey in the final composition preferably ranges between 80-98% (wt/wt), more preferably between 84-93%. Of note, the content of honey and the content of water in the composition do not add up to 100%, as honey also has a water content that is included in the total water content specified.

The relative density of the composition of the invention may be, e.g., 75 - 82°Brix. For example, it may be about 79°Brix at 19.2% water content. It can be determined by using a refractometer suitable for measuring densities of approximately 60-90°Brix (i.e. HHTEC® RHB-90ATC, Hong Han GmbH, China).

Preferably, the composition of the invention is substantially homogenous, i.e., the plant extract and honey are substantially mixed. There may be residual plant parts in particular, pulverized plant parts, in the composition, but, if so, these are also preferably homogenously mixed with the other components.

Of course, the characteristics of the honey contribute to the characteristics of the product of the invention. In addition to taste preferences, technical characteristics such as viscosity, water content and the tendency to crystalize play an important role.

By adding the water-based plant extract to the honey, the water content is increased and the viscosity of the final composition reduced, thereby altering its fluidity for more accurate dosing, while maintaining a commercially acceptable storage life. To produce the composition according to the invention, honey with an initial water content of 15 - 18 % is preferable. An initial water content of 15 - 17.5 % is advantageous. The lower the initial water content of the honey, the more water-based plant extract can be added during the production process to maximize the uptake of flavors. Measurements of the water contents of different honeys with a commercially available handheld refractometer (HHTEC® RHB-90ATC, Hong Han GmbH, China) resulted in the following values:
a) Acacia honey (Bio-Robinienhonig, (DE-ÖKO-034), Imkerei GbR Schulte, Germany): 16,6%
b) Forest honey (Waldhonig, EU-Länder und Nicht-EU Lander, Fürsten-Reform Dr. med. Hans Plümer Nachf. GmbH & Co. KG, Germany): 17.3%
c) Heather honey (Heidehonig, EU-Länder, Fürsten-Reform Dr. med. Hans Plümer Nachf. GmbH & Co. KG, Germany): 18.2%
d) Fir honey (Tannenhonig, EU-Länder, Dreyer-Bienenhonig GmbH, Germany): 17.4%
e) Lime honey (Bio-Lindenhonig, Deutschland, Schulte GbR, Germany): 17.7%.

Importantly, measurements may vary dependent on the individual honey batch and the refractometer used. Measurements conducted by Quality Services International (QSI) GmbH according to ASU L 40.00-2 (1992-12) VA140 resulted in a water content for acacia honey of 15.5%.

Further, while the crystallization of glucose in honey may be perceived as desirable under certain circumstances, it increases the viscosity of honey and therefore should be avoided in the present invention. Therefore, a slowly-crystallizing, low-viscosity honey (i.e. acacia honey, lime honey, forest honey and other honeydew honeys) is preferred for processing in the present invention to obtain a syrup-like consistency of the final product. The ratio of glucose and fructose determines how fast the honey crystallizes. Honey varieties with a low fructose to glucose ratio, such as dandelion, aster, clover, and rata honey crystallize swiftly in days and weeks, while honey varieties with a high fructose to glucose ratio, e.g., acacia, tupelo, longan, eucalyptus, leatherwood and honeydew crystallize slowly and stay liquid for years. Acacia honey may be based on white (*Robinia pseudoacacia* L.) or yellow acacia (*Caragana arborescens* Lam), which have very similar characteristics and are thus often used interchangeably. Preferably, acacia honey is white acacia honey.

Despite its low water content, a high degree of glucose crystallization and an accordingly high viscosity may render creamed honey disadvantageous for use in the present invention.

Preferably, the honey is acacia honey, orange blossom honey, thyme honey, manuka honey, a honeydew product such as forest honey or fir honey, or any combination thereof, preferably, acacia honey.

Using the example of acacia honey, the viscosity of unprocessed honey is in the range of 25,000 - 30,000 mPa*s at a water content of 15,5 %. The viscosity of the composition according to the invention may be in the range of 6,000 - 9,000 mPa*s, e.g., 6.500-8.000 mPa*s, at a water content of 19.2 - 20.3 %.

In the context of the invention, higher viscosity honey such as blossom honey was also tested. However, it turned out that by adding liquids (a saffron spice extract with rosewater) and consequently increasing the water content to about 20%, the honey, although creamy, retained its higher viscosity and crystalline structure. Hence, the desired flowability was not achieved.

Thus, preferably, the honey used for preparation of the composition of the invention has a low viscosity (e.g., 35,000 mPa*s or less, preferably, 30,000 mPa*s or less) and a low water-content (e.g., 18% or less, 17.5% or less, preferably, 17% or less). Advantageously, it also has a low tendency to crystalize (e.g., as low or lower than acacia honey), which is dependent on the glucose/fructose ratio of the sugar. Preferably, the glucose/fructose ratio of the honey is as low or lower than that of acacia honey or a honeydew product. In a particularly preferred embodiment, the composition is prepared with acacia honey.

The composition of the invention further comprises a water-based plant extract. The term "water-based plant extract" refers to a product obtained upon infusing plant parts in water to allow for transfer of nutrients and/or flavors into the water. The water used for extraction may be of any temperature, e.g., it may be hot (70-100°C, e.g., at 100°C, or 80-90°C), 50-70°C, 30-50°C, 0-10°C, 10-30°C or room temperature at about 20°C. Steam may also be used for preparation of a water-based plant extract. The preferred temperature depends on the plant material that is to be extracted and on the desired flavors. For example, for a black tea extract, hot water at 100°C is typically used, while for a green tea extract, water at lower temperatures, e.g., 80-90°C is typically used. If the plant material comprises valuable ingredients (e.g., for saffron) that are heat-labile, a cold extraction (e.g., at 15-30°C, 20-25°C or room temperature) is advantageous.

The water-based plant extract comprises water, i.e., it is not a dry or lyophilized extract. Optionally, to avoid a significant alcohol-content of the final product, the water-based plant extract does not comprise other solvents such as ethanol or organic solvents in a significant amount, e.g., more than 2% or more than 1%. The water-based plant extract also has to be distinguished from a fruit or plant juice, or a concentrate thereof, which may be prepared by pressing the natural liquid contained in fruit and vegetables, not by contacting plants or plant parts with water.

The water-based plant extract may be, e.g. a spice extract, rosewater, an herb extract, an algae extract or any combination thereof, preferably, a spice extract in rosewater. The spice may be, e.g., saffron, cinnamon, cardamom, cloves, ginger, curcuma, lavender, ashwagandha, ginseng, pink pitaya, pepper, chili, coffee, cocoa and any combination thereof, preferably, saffron. Saffron refers to saffron threads or pulverized saffron threads.

A spice is a seed, fruit, root, bark, or other plant substance primarily used for flavoring, coloring or preserving food. Spices may be distinguished from herbs, which are the leaves, flowers, or stems of plants used for flavoring or as a garnish. The distinction is sometimes hard to make, as, e.g., saffron, i.e. saffron threads are parts of a flower, but they are typically considered spice. Rosewater is a flavored water that may be prepared by steeping rose petals in water. Alternatively, it may be the hydrosol portion of the distillate of rose petals, a by-product of the production of rose oil for use in perfume.

A preferred water-based plant extract is a saffron extract in rosewater. The saffron extract may, e.g., be prepared with cold (e.g., room temperature) rosewater. Alternatively, hot water (e.g., 100°C) may be used for preparation of the extract, which however should be cooled to temperatures below 40°C before addition to the honey. Such an extract may also be prepared based on a mixture of saffron with at least one other spice or herb, i.e., comprise other herb or spice extracts.

Cinnamon alone or e.g., combinations of cinnamon, cardamom, and cloves with or without addition of ginger are also spices that can be used to prepare a tasty and healthy composition of the invention. In this case, the extraction typically is an extraction with hot (e.g., 100°C) water.

Herb extracts that may be used are, e.g., green tea, black tea, matcha tea, lemon balm, lemon verbena, lavender, sage, butterfly pea flower, thyme, eucalyptus or mint, e.g., peppermint extracts. Extracts of citrus peel, e.g., lemon or orange, may also be used.

Typically, not whole plants, but plant parts are used for preparation of the plant extracts. While extraction of plants or plant parts may be performed using complete plant parts, e.g., chunks of cinnamon bark or peppermint leaves, typically, the plant parts are pulverized before extraction to maximize extraction.

An algae extract may be e.g., an extract of Spirulina, Chlorella or Aphanizomenon flos-aquae (Afa)).

If several spice and/or herb/and or algae-extracts are comprised in the final product, preferably, the spices/herbs of which the extracts are contained in the final product are extracted together, but separate extraction and combination of the extracts is also possible.

A preferred combination extract that may be used in the composition of the invention, e.g., in combination with acacia honey, comprises extracts of saffron, lavender, cinnamon, cardamon and rose water.

The water-based plant extract added to the honey may still comprise plant or plant parts, which has the effect that further flavor can be transferred into the final product. Alternatively, the plant or plant parts are not, or not to a significant amount, comprised in the extract, which may allow for easier processing of the composition, and which may lead to a more homogenous product. As further discussed below, the composition of the invention may also comprise or not comprise the plant or plant part extracted. Optionally, the composition of the invention does not comprise the plant or plant part extracted.

The composition of the invention may optionally further comprise non plant-based spices such as salt, e.g, about 0.05-1 g / 750 mL honey.

The invention also provides a container suitable for dispensing a predetermined amount of a composition by actuating a pumping mechanism, the container comprising the composition of the invention. The container may comprise the pumping mechanism, or it may be suitable for operably linking it to the pumping mechanism. For example, the container may be a bottle with a top, e.g., a screw top capable of being operably linked with a suitable pump. The container may also be a plastic bag suitable for being linked with a suitable pump. The pump may be capable of dispensing a volume of the composition of the invention of about 1-15 mL, e.g., about 2-14 mL, or about 2.5-13 mL, 3-12 mL, 4-11 mL, 5-10 mL, 6-9 mL or 7-8 mL. According to the invention, preferably, about 7-8 mL of the composition of the invention are used to flavor 200 mL of beverage, typically 200 mL of milk, if the plant extract is saffron extract, e.g., saffron extract in rose water.

In an alternative embodiment, the container carries a bottle spout.

The invention further provides a food or beverage comprising the composition of the invention.

A beverage is a composition suitable for drinking, preferably, for human consumption. In the context of the invention, food is a composition suitable for eating, preferably, for human consumption. The food or beverage prepared according to the invention is safe for human consumption, when consumed in reasonable amounts, e.g., in amounts of at least 600 mL beverage/day. The beverage may, e.g., be a hot or cold drink, preferably, a hot drink. In a preferred embodiment, wherein the composition of the plant extract is saffron extract, in particular, a saffron extract in rosewater, the rest of the beverage is milk, i.e., the beverage is a saffron milk. Saffron milk may be consumed cold, but typically it is a warm (i.e., at least 37°C) or hot (e.g., at least 60°C, preferably, 60-70°C) saffron milk.

In one aspect, the invention also provides the use of the composition of the invention for preparing a beverage or food, preferably, a beverage. The invention also provides a method of preparing a food or beverage, comprising mixing the composition of the invention with a beverage educt or food educt. The beverage educt preferably is milk or water, most preferably, milk. The milk may originate from animals such as cows, sheep, goat, yak, buffalo, camel, horses, etc, preferably, it is cow's milk. Milk may also refer to plant milk, i.e. non-dairy water-based extracts obtained from plant sources, e.g., oat, almond, hazelnut, lupin, rice, macadamia, hemp, spelt, soy or others. It may also be coconut milk. Furthermore, milk may, e.g., be foamed milk. The beverage may also be another non-alcoholic beverage such as tea, coffee, espresso, cappuccino, an iced latte, a frappe, a milk shake, a smoothie, soda, lemonade or a hot/cold chocolate, or an alcoholic beverage such as a cocktail, a long drink, beer, wine or liquor. The beverage may further be decorated, e.g., depending on taste, with pulverized saffron, chocolate, cocoa powder or cinnamon, and/or an herb, fruit or flower, before serving. The method of preparing the beverage may also comprise packaging the beverage or food.

Food that may be prepared with the composition of the invention may e.g., be a dessert, a yoghurt, a cake, a cookie, ice-cream, a pudding, or a sauce.

Preferably, the beverage comprising the premix composition is a saffron milk. In alternative embodiments, the disclosed composition may be solved in water, tea, coffee, an alcoholic beverage, yoghurt, ice cream, pudding, or other types of food and beverages.

One advantage compared to conventional sugar-based syrup premixes for beverages is that, due to its high fructose content, the sweetness of honey is approximately 25% more intense than that of sucrose (Samarghandian et al. 2017. Pharmacognosy Res. 9(2), 121-127). Therefore, a higher amount of sucrose-based syrups needs to be added to a beverage or food for sweetening compared to the honey-based composition taught in the present invention. For comparison, for other commercially available syrups, e.g., Monin syrup (Monin Chai Teekonzentrat, Monin, France), a dose of 25 mL syrup for 180 mL milk is recommended. This corresponds to approx. 17.5 g sugar, compared to about 8-9 g of sugar for 7.5 mL of saffron-flavored acacia honey based syrup of the invention at a sugar content of 78,2 °Brix with about 20% water content. This leads to a reduction of about 50% sugar intake per serving for this example. Of course, the dosing depends on personal taste, and other flavors may require higher amounts of the composition of the invention to achieve a satisfying flavor.

Thus, the use of the present invention may significantly reduce sugar intake by the consumer.

The invention also relates to a method for preparing the disclosed (premix) composition of the invention, the method comprising steps of:
a) preparing a water-based plant extract,
b) mixing the water-based plant extract with honey to generate an extract-honey mixture,
c) optionally, removing plant parts and/or bubbles.

Step a) may comprise pulverizing a plant part to generate plant particles, e.g., plant particles having a maximum size of 100 µm, preferably, at most 30 µm or most preferably, at most 15 µm, prior to contacting said plant particles with water. This is particularly relevant when the plant is a spice, and/or if a highly efficient extraction is desired. Advantageously, e.g., saffron is pulverized to generate plant particles of at most 30 µm, preferably, at most 15 µm. This may be achieved, e.g., by grinding the plant parts, e.g., in a grinder wherein the produced particle size can be chosen. The size of plant particles may be confirmed, e.g., by passing the particles through a mesh of appropriate size, but that level of exactness is not required. Pulverization does not only render the extraction more efficient, but it further allows for a significant portion of the pulverized plant parts in the composition of the invention without leading to apparent inhomogeneities that would e.g., have negative effects on the handling, e.g., pumping of the composition.

Step a), i.e., the preparation of the water-based plant extract may further comprise
i) contacting water with a plant part (preferably, a pulverized plant part), to obtain a water-plant mixture,
ii) incubating the water-plant mixture, and
iii) optionally, removing the plant part.

Upon contact, and independently, also during incubation, the water may be of any desired temperature, e.g., cold water, room temperature water (e.g., 20-25°C in this context), 30-40°C, 40-50°C, 50-60°C, 60-70°C, 70°-80°C, 80-90°C, 90-100°C or 100°C. As discussed above, this depends on the plant part and the desired flavors and ingredients that are to be extracted. For example, if there are temperature-labile ingredients, a low temperature, e.g., below 40°C, below 30°C or room temperature, is preferred. If all ingredients are essentially stable at 100°C, extraction at 100°C may be more efficient, and a lower amount of plant part may be needed. However, extraction at colder temperatures may also be advantageous to avoid extraction of components that are not desired, e.g., bitter flavors. The water-plant mixture may be heated over the whole time of incubation, but that may not be required. Boiling water (100°C) may e.g., be used for extraction of cinnamon, cloves, cardamon or ginger, or a combination thereof. It is also typically used for extraction of herbs, e.g., black tea, mint, lemon balm, lemon verbena, sage or thyme. Extraction temperatures may be varied during the extraction process, dependent on the spices used for preparing the water-based plant extract. For example, boiling water may be used at first to prepare extracts of more heat-stable spices before reducing the extraction temperature and adding heat-sensitive ingredients.

Boiling may further be used for reducing the amount of water and concentrating the flavors in the water-based extract. This is however not carried out until a dry product is obtained. Preferably, the volume of the water-based extract is not reduced to less than 50% of the original volume.

The incubation of the water-plant mixture may take place for any desired time, e.g., for at least 1 min or at least 3 min. The incubation may also be for 10-60 min, 20-50 min, or 30-40 min. Of course, incubation for longer times, e.g., at least 1.5 h, at least 2 h, at least 3 h, at least 4 h, at least 5 h, at least 6 h, at least 8 h, at least 10h, at least 12 h, overnight, at least 24 h, at least 48 h, at least 96 h or at least a week or at least two weeks is also possible.

While carrying out step iii) may be advantageous for the efficiency of the process, because it reduces the need for a more laborious removal of plant parts from the honey-mixture, the inventor has shown that it is beneficial not to remove the plant part at this stage. In particular, if the plant part is not removed, there is the possibility of further extraction of flavors in the honey. This extraction can be preferable to longer incubation with water alone, as firstly, the volume of water is larger, because of the water-content of the honey, secondly, the enzymes and/or other ingredients in the honey may also play a role, and thirdly, the microbial contamination may be reduced, because, as discussed above, honey is antibacterial and not prone to fermentation, and this extends to the composition of the invention.

If the time of incubation is long enough to allow for bacterial contamination and growth, it is preferred that plant parts and bacteria are removed after the incubation, e.g., by filtration, typically in different steps, but including a sterile filtration. Alternatively, the mixture may be heated, e.g., pasteurized or boiled to prevent contamination of the composition of the invention. If the plant parts are not removed, the time of initial incubation can be rather short, as there is further time for extraction after mixing with the honey.

The amounts of plant parts also depend on the selection of the plant part, and the desired intensity of flavor in the end product, i.e., the food or beverage. There also is a relationship with the desired sweetness, because, as described, the ratio of honey to plant-extract is limited. Generally, lower amounts may be used for hot extraction (e.g., using boiling water) than for cold extraction, and/or times of incubation may be lower. If a more intense flavor is desired, a longer time of incubation and/or a more efficient extraction method, e.g., a warmer temperature or longer incubation at high temperature can be used.

The plant part may, e.g., be a spice, such as saffron. In the case of saffron, hot (e.g., with boiling water) or cold extraction is possible, and both provide good results. Cold extraction is a gentler process that preserves heat-labile ingredients. Hot extraction is more efficient and thus minimizes the amount of saffron that is required. For example, in a preferred embodiment, saffron or a mixture thereof with other spices and/or herbs is incubated with water at a temperature of about 50-70°C, e.g., about 60°C for about 10 min, or at room temperature for about 15-30 min, without removal of plant parts before mixing with the honey. E.g. 14 g of a saffron spice mixture may be used for incubating with 60 mL of water of about 60°C for about 10 min.

If the extraction or incubation is carried out involving temperatures of more than 40°C, it is important that the extract is cooled to at least 40°C or less before it is mixed with the honey.

In step b) of the method, the water-based extract (optionally, still comprising plant parts, preferably, pulverized plant parts) is mixed with the honey. The mixing is carried out until homogeneity is reached. This mixture may then again be incubated, e.g., for at least 1 hour, at least 2 h, at least 3 h, at least 4 h, at least 5 h, at least 6 h, at least 8 h, at least 10h, at least 12 h, overnight, at least 24 h, at least 48 h, at least 96 h or at least a week or at least two weeks, preferably, for 6-48 h, more preferably about 24 h at about 20-25° C. Alternatively, incubation may occur at lower temperatures, e.g. at 10-13°C, preferably 11°C.

Typically, during the incubation, bubbles and, partly agglomerated plant particles rise to the surface of the mixture. Plant parts and/or bubbles are preferably removed in step c), e.g., by skimming and/or filtering. For example, a filter having a mesh size of 0.1 to 0.3 mm² has proven to be suitable for this. Of note, the process typically does not remove all plant parts, in particular, if these are pulverized, but merely removes a portion thereof. In particular, it removes aggregated plant parts. Bubbles formed in the mixing process are also removed. Preferably, skimming is carried out as a first step, and then, filtering is used. If plant parts have been removed before mixing with the honey, this step may not be required. However, removal of bubbles is still advantageous. For filtering, it is preferred that the composition is heated to a temperature of at most 40°C to decrease viscosity. To avoid higher temperatures that may damage the honey, the composition may be stirred during heating. The temperature is preferably controlled and kept below 40°C, preferably, kept below 38°C, below 37°C, at 30-35°C or at about 35°C.

The optional filtration allows for a homogeneous appearance and prevents the sedimentation of insoluble plant agglomerates in the final product. This reduces the risk of formation of a discrete phase comprising plant parts which may tend to ferment. The step thus increases stability and shelf-life of the product.

The inventor has shown that it is advantageous that the extract-honey mixture is incubated after mixing for at least 6 hours, and plant parts and/or bubbles are then removed by skimming (clarification), and/or the extract-honey mixture is heated to a temperature of 35-40°C, and filtered using a filter having a mesh size of 0.1 to 0.3 mm², preferably, both. The removal of air bubbles can also be simplified by exposing the honey to low pressure or vacuum.

For example, a water-based saffron extract of pulverized saffron, optionally, with rosewater, which still contains pulverized saffron, may be mixed with honey. Preferably, the honey is acacia honey. The mixture may be incubated, e.g., for at least 6 hours, optionally, overnight, before plant parts and/or bubbles are removed by skimming and then filtering through a filter with a mesh size of 0.1-0.3 mm² at a temperature of about 35°C. The obtained composition of the invention may be used to prepare a saffron milk, e.g., by dissolving about 7.5-10.5 g of the composition in about 200 mL milk such as cow's milk or oat milk, preferably, cow's milk, e.g., hot milk at 50-100°C, preferably, 60-70°C.

The residue obtained by the skimming and/or filtering process contains honey with air bubbles, the water-based plant extract and plant parts, preferably, pulverized plant parts. This residue can also be used. The invention thus provides a method of preparing a beverage or food comprising carrying out the method of the invention, wherein plant parts removed after mixing the water-based plant extract with the honey are mixed with a beverage or food. For example, this food may be a food as described above, preferably, a yoghurt, or an ice-cream.

It is noted that, in the context of the invention, different methods for preparing a honey-based beverage premix have been tested. The method of the invention as described above has proven to be advantageous compared to alternative processes, e.g., a process wherein dry pulverized plant particles, e.g., dry saffron is mixed with the honey. In comparison, the method of the invention does not only improve taste, but it also leads to an easier processing, because less air bubbles are introduced upon mixing with the honey, and a more homogenous mixture, with less agglomerates of plant particles, can be obtained.

In the context of the invention, unless explicitly stated to the contrary, "a" should be understood as "at least one", i.e., it includes two or more. For example, reference to a spice should be understood to include embodiments wherein two or more spices are used. In the context of the invention, "about" should be understood to refer to +/- 10%.

All literature cited herein is herewith fully incorporated. The present invention is further illustrated, but not limited, by the following example.

### Example: Preparation of saffron milk

### 1. Characteristics of the honey

For preparing a preferred composition of the invention, saffron and other spices together with rosewater were used to create a saffron honey syrup. Acacia honey is a particularly suitable basis for such a honey syrup. In this case, rosewater was used in the production of the syrup to reduce the viscosity and subsequently increase the water content from approx. 15-17 % to approx. 19 % - 20 % (wt/wt). Analogously, compositions with other types of honey and recipes can be prepared (for example, a chai syrup with forest honey, a spice mixture (e.g., cinnamon, cloves, cardamon) and/or tea extract or a matcha syrup with acacia honey, matcha powder, spices and water).

The acacia honey used for the present experiment (Bio-Rubinienhonig, DE-ÖKO-034, Imkerei GbR Schulte, Nennhausen, Germany) was determined to have a viscosity of 27,492 mPa*s at 20°C. Acacia honey was found to be too viscous to allow for dispensing with a standard pumping mechanism.

Viscosity was determined with a falling sphere/ball viscometer (as described in the European Pharmacopoeia (Ph. Eur. 2.2.49, 9th edition, 3rd suppl. 2017/18) at 20°C. The measurement was carried out by the Quality Services International GmbH, Bremen.

The acacia honey was determined to have a water content of 16.6% (wt/wt) at 20°C, determined with a refractometer HHTEC® RHB-90ATC, Hong Han GmbH, China, which is designed for analysis in a range of 58-90% Brix, 10-32% water, with a specified accuracy of +/-0.2% water). The water content of the same honey measured according to ASU L 40.00-2 (1992-12) VA140, also at 20°C, was 15.5% (wt/wt).

A honey that has not been thermally treated was selected to ensure integrity of enzymes and long term stability.

### 2. Preparation of saffron extract in rosewater

The spices, such as saffron (Ghasem Salehi, Tehran, Iran), were pulverized with a grinder (e.g., Red Clix RX35 - Metric Precision Thread according to ISO DIN13-2, Comandante, Germany, with C40 MK3 Nitro Blade) to generate a fine powder with a particle size of approximately 15-30 µm. Particle size may also be smaller. The finer the spice, the easier the spice powder can be mixed into the honey, and the better the extraction of aroma. The particle size was determined via the setting of the grinder.

Then, rosewater (1&1 group, Ghatran Gol Iran Co. via Dash Morghab Co., Iran), e.g., 60 mL, was mixed with powdered saffron and/or other spices (cinnamon (Product of Sri-Lanka, Senger Naturrohstoffe, Dransfeld, Germany), lavender (Senger Naturrohstoffe, Dransfeld, Germany) and cardamom (Gewürzland GmbH, Vienna, Austria)), e.g., 14 g, to extract the water-soluble substances from the spice, and, optionally, allowed to incubate for a convenient time, e.g., for 5 min to 1 hour, typically, 15 min. The incubation may be carried out at hot or cold temperatures.

For the present experiment, the extraction of 14 g saffron spice mixture with 50 or 60 mL rose water took place at cold temperatures, without heating, i.e., at room temperature (20-25°C).

The amount of rosewater determines the final water content of the honey. The amount of rosewater that is to be used varies dependent on the initial water content of the honey, and it is chosen to lead to a water content in the predetermined range.

For example, the amount of rosewater required to increase the water content of the mixture to the desired water content is incubated with 14 g of powdered saffron/750 mL of honey. Preferably, the ratio of the liquid used for extraction to the extracted plant material is at least 1:1 (wt liquid/wt plant material). After mixing with the honey, the selected amount of rosewater leads to an increase of the water content of the honey to 17-23 %, preferably, 18-21% or 19-20%.

750 mL (ca. 1075 g) of acacia honey, as characterized above, have a water content of 15,5% measured according to ASU L 40.00-2 (1992-12) VA140 and 16.6% as determined with the handheld refractometer HH-TEC RHB-90ATC.

### 3. Preparing a composition comprising rosewater-based saffron extract and acacia honey

Rosewater-based saffron extract based on extraction of 14 g saffron spice mixture with 50 mL or 60 mL of rosewater prepared in step 2 were added to 750 mL (1075 g) of acacia honey. The mixture was stirred until it appeared homogenous. The obtained mixture of honey and saffron extract was incubated at room temperature, e.g., for 6-48 h, typically, 24 h, to provide additional time for saffron extraction.

Aggregated solids and air bubbles that have risen to the surface during incubation were subsequently removed either by manual skimming or, preferably, by filtering it through a sieve, e.g., with a mesh size of 0.1 - 0.3 mm², for which the mixture was heated to a temperature of at most 40°C, preferably, about 35°C using a heater with a temperature control, e.g., an immersion heater. The heating reduces viscosity of the honey, which facilitates filtration. A pre-screen with a mesh size of 1 mm² may be used to remove larger particles beforehand. The filtration fineness influences the final appearance and amount of plant material in the final product. The degrees of fineness can be chosen freely as long as no discrete layer of plant products and/or air bubbles in the final product forms.

It has further been found by the inventor that the approach of mixing the spice with water before mixing it with the honey minimizes the introduction of air bubbles into the honey, and reduces agglomeration of pulverized plant particles.

After cooling, the water content of the final products prepared with 50 mL or 60 mL of rosewater was measured to be 19.4% or 20%, respectively. The measurements were conducted with a handheld refractometer (HHTEC® RHB-90ATC, Hong Han GmbH, China). The final products were filled into a bottle with a standard pump dispenser (e.g., Shenzhenshi ximing keji youxian gongsi, Shenzhen China or Monin pump dispenser 700 mL, 5 mL dose). The compositions were easily dispensable with the pump. The dispensed amount was set to, e.g., 7.5 mL.

### 4. Preparing a saffron milk

Different amounts of the obtained composition were dissolved in hot cow's (Demeter) and oat milk (Oatly) (e.g., 60-70°C). The milk may be foamed milk. For a saffron milk with optimal sweetness and flavor, 7.5 mL (10.5 g) of the acacia honey-saffron extract premix were dissolved in 200 mL milk.

For obtaining a milk drink with comparable sweetness, about 25 mL of a sugar-based Monin syrup (Monin Chai Teekonzentrat, Monin, France) in 180 mL of milk are needed.

### 5. Preparing a saffron food

Plant parts removed from the composition of the invention after mixing the water-based plant extract with the honey can also be mixed with a beverage or food. For example, 5 g of the removed saffron was mixed with 200 g vanilla ice-cream.

### 5. Comparison of different extraction temperatures

30 mL of rosewater (1&1 group, Ghatran Gol Iran Co. via Dash Morghab Co., Iran) were mixed with 3.25 g of powdered saffron (Ghasem Salehi, Tehran, Iran) prepared as described above to extract the water-soluble substances from the spice. The extraction was allowed to take place for 5 min. Afterwards, 3.75 g of other spices (lavender (Senger Naturrohstoffe, Dransfeld, Germany), cinnamon (Product of Sri-Lanka, Senger Naturrohstoffe, Dransfeld, Germany), cardamom (Gewürzland GmbH, Vienna, Austria)) were added to the rosewater-based saffron extract and were incubated for another 5 min.

Incubation was done in a Thermomix (Vorwerk Thermomix TM6 with butterfly inset) at different temperatures, in particular, 37°C, 60°C and 90°C.

Then, the extract was mixed with 535 g of acacia honey and stirred at the setting 0.5 for 5 min. If the mixture was not yet homogenous, it was again stirred for 3 min with the bufferfly inset.

The mixture was incubated for 10 days. The honey was clarified, e.g., 2 or three times, starting after 1 day. Finally, the, mixture was filtered as described herein by cold filtration.

The water content was determined to be 19.4-20 % (wt/wt) with the handheld refractometer at 20°C.

7.5 mL of the obtained sirups were mixed with 200 mL cow's milk (Demeter) or oat milk (Oatly) at 60°C. Three blinded testers assessed the intensity and quality of the taste as described in the table below, wherein the testers were instructed to focus on intensity and communicate any remarks relating to the taste, with 3 being optimal taste and 1 being less optimal taste.

**Table**

| Extraction temperature | 37°C | 60°C | 90°C |
|---|---|---|---|
| Cow's milk, tester 1 | 1 | 3 | 2 |
| Cow's milk, tester 2 | 2 | 3 | 1 |
| Cow's milk, tester 3 | 2 | 3 | 1 |
| Oat milk, tester 1 | 1 | 3 | 2 |
| Oat milk, tester 2 | 2 | 3 | 1 |
| Oat milk, tester 3 | 3 | 2 | 1 |

In the tests with both types of milk, the sample obtained with extraction with 60°C was assessed to be particularly intense and tasty. The staining was also more intense than in the other two samples. The samples of the 37°C extraction were also considered pleasant. Interestingly, the extraction at 90°C led to a product with a taste described as less intense and as having a slightly irritating aftertaste.

### 6. Determination of water content and viscosity

50 mL of rosewater (1&1 group, Ghatran Gol Iran Co. via Dash Morghab Co., Iran) were mixed with 6.5 g of powdered saffron (Ghasem Salehi, Tehran, Iran) prepared as described above to extract the water-soluble substances from the spice. The extraction was allowed to take place for 5 min. Afterwards, 7.5 g of other spices (lavender (Senger Naturrohstoffe, Dransfeld, Germany), cinnamon (Product of Sri-Lanka, Senger Naturrohstoffe, Dransfeld, Germany), cardamom (Gewürzland GmbH, Vienna, Austria)) were added to the rosewater-based saffron extract and were incubated for another 5 min.

Incubation was done in a Thermomix (Vorwerk Thermomix TM6 with butterfly inset) at 37°C.

Then, the extract was mixed with 1070 g of acacia honey (water content 16.6% determined with the handheld refractometer HH-TEC RHB-90ATC and 15.5 % according to ASU L 40.00-2 (1992-12) VA140, both 20°C) and stirred at the setting 1 for 5 min. 10 mL of rosewater were added.

The mixture was incubated overnight. The mixture was clarified as described herein by filtration at 37°C.

The water content was determined to be 20 % (wt/wt) with the handheld refractometer HH-TEC RHB-90ATC at 20°C. The water content was determined to be 19.2 % (wt/wt) according to ASU L 40.00-2 (1992-12) VA140 (20°C).
The viscosity measured at 20°C according to the falling sphere/ball viscometer method (developed by Hoppler, as described in the European Pharmacopoeia (Ph. Eur. 2.2.49, 9^{th} edition, 3^{rd} suppl. 2017/18) was 27,492 mPa*s for the non-treated acacia honey and 7,692 mPa*s for the composition of the invention prepared in this example.

## Claims

1. A composition suitable for preparing a beverage or food, comprising honey and a water-based plant extract, wherein the composition has a water content of 17-23 % (wt/wt) and a viscosity η of at most 15,000 mPa*s.

2. The composition of claim 1, wherein the composition has a water content of 18-20% (wt/wt), preferably, 19-20 % (wt/wt).

3. The composition of any of the preceding claims, wherein the composition has a viscosity η of 1,000-10,000, preferably, 6,000-9,000 mPa*s.

4. The composition of any of the preceding claims, wherein the composition has a honey content of 80-98% (wt/wt).

5. The composition of any of the preceding claims, wherein the honey is selected from the group consisting of acacia honey, a honeydew product such as forest honey, and any combination thereof, preferably, acacia honey.

6. The composition of any of the preceding claims, wherein the water-based plant extract is selected from the group consisting of a spice extract, rosewater, a herb extract, an algae extract, and any combination thereof, preferably, a spice extract in rosewater.

7. The composition of claim 6, wherein the spice is selected from the group comprising saffron, lavender, cinnamon, cardamom, cloves, curcuma, ginger, ashwagandha, ginseng, pink pitaya, pepper, chili, coffee, cocoa and any combination thereof, preferably, saffron, optionally, a combination of saffron, lavendar, cinnamon and cardamom.

8. A container suitable for dispensing a predetermined amount of a composition by actuating a pumping mechanism, the container comprising the composition of any of the preceding claims.

9. A food or beverage comprising the composition of any of claims 1-7.

10. A method for preparing the composition of any of claims 1-7, comprising steps of
a) preparing a water-based plant extract,
b) mixing the water-based plant extract with honey to generate an extract-honey mixture,
c) optionally, removing plant parts and/or bubbles.

11. The method of claim 10, wherein step a) comprises pulverizing a plant part to generate plant particles, preferably having a maximum size of 30 µm, prior to contacting said plant particles with water.

12. The method of any of claims 10 or 11, wherein step a) comprises
i) contacting water with a plant part, to obtain a water-plant mixture, preferably, at a temperature of 50-70°C,
ii) incubating the water-plant mixture,
iii) optionally, removing the plant part.

13. The method of any of claims 10 - 12, wherein removing plant parts and/or bubbles is performed by skimming and/or filtering using a filter having a mesh size of 0.1 to 0.3 mm²,
wherein, preferably, plant parts and/or bubbles are removed after mixing the water-based plant extract with the honey,
wherein, optionally, the water-based plant extract-honey mixture is incubated after mixing for at least 6 hours, and plant parts and/or bubbles are then removed by skimming, and/or the extract-honey mixture is heated to a temperature of at most 40°C and filtered using a filter having a mesh size of 0.1 to 0.3 mm².

14. A method of preparing a beverage or food comprising mixing the composition of any of claims 1-7 with a beverage or food educt, wherein the beverage or food is selected from a group comprising milk, water, coffee, tea, soda, lemonade, an alcoholic beverage or yoghurt.

15. A method of preparing a beverage or food comprising carrying out the method of any of claims 10-13, wherein plant parts removed after mixing the water-based plant extract with the honey are mixed with a beverage or food.
